# EUROPEAN PATENT SPECIFICATION

(11) **EP 3 834 608 B1**
(45) Date of publication and mention of the grant of the patent: **30.11.2022**
(21) Application number: 20859668.4
(22) Date of filing: 18.09.2020
(51) Int. Cl.: A01J 5/04, A01J 7/00, A01J 5/08

(54) **LINER, TEAT CUP, AND MILKING DEVICE**
ZITZENGUMMI, ZITZENBECHER UND MELKVORRICHTUNG
MANCHON, GOBELET TRAYEUR ET DISPOSITIF DE TRAITE

(30) Priority: 02.10.2019 JP 2019181844
(43) Date of publication of application: 16.06.2021
(73) Proprietor: Tokuyama Corporation, Shunan-shi, Yamaguchi 745-8648 (JP)
(72) Inventor: KONDO, Hitoshi, Shunan-shi, Yamaguchi 745-8648 (JP); INUI, Yoji, Shunan-shi, Yamaguchi 745-8648 (JP)
(74) Representative: HGF
(86) International application number: PCT/JP2020/035475
(87) International publication number: WO 2021/065570

(56) References cited:
- WO-A1-2020/059692
- DE-A1- 10 056 224
- DE-A1-102007 053 230
- JP-A- 2017 501 677
- US-A- 6 055 931
- US-A1- 2005 284 379
- US-A1- 2011 126 768
- US-A1- 2012 055 409

## Description

### TECHNICAL FIELD

The present invention relates to a liner, a teat cup, and a milking device.

### BACKGROUND ART

Milking is performed using teat cups attached to the teats of a cow. The teat cup includes a cylindrical liner through which milk passes and a shell which covers an outer periphery of an upper portion of the liner while forming a space between the shell and the liner. The teat is inserted into the upper portion of the liner and retained therein. In this state, a pressure in the space between the shell and the liner is increased and reduced. The changes in the pressure cause the upper portion of the liner to elastically deform between an open state and a closed state, whereby milking is carried out while the teat is massaged.

Here, cows for milking may suffer from mastitis. Mastitis reduces the production of milk, deteriorates the quality of milk, incurs costs for treating mastitis, and makes it necessary to dispose of raw milk during a Restriction of distribution period. Further, mastitis may incur costs for weeding out the affected cow and purchasing an alternative cow.

A prevalence of mastitis is said to be high during periods in which teat orifices are in an open state, that is, one week of an early dry period, one week before parturition, and one week after parturition.

This is because there are bacteria present on a teat surface that could not be wiped off at the time of wiping prior to milking, the bacteria are mixed into milk when milking is carried out, and the milk containing the bacteria penetrates through the teat orifice in the event that backflow of milk (a droplet phenomenon) occurs in a liner.

Prevention of backflow of milk plays an important role in mastitis prevention. There are techniques disclosed for prevention of backflow of milk, examples of which include a teat cup in which a clip is attached to a portion of a liner corresponding to a lower end of a teat so that the liner opens gradually (see Patent Document 1), a teat cup in which a shape and a thickness of a mouthpiece part provided in an upper portion of a liner and those of a bore part disposed in a shell are adjusted so that the liner collapses in an adjusted manner (see Patent Document 2), a teat cup in which a mouthpiece part is provided with a vent opening thereat (see Patent Document 3), a teat cup in which a short milk tube part in a lower portion of a liner is provided with a vent opening thereat (see Patent Documents 4 and 5), a milk claw in which a portion connected to a short milk tube part has a large capacity so that milk is inhibited from staying in a liner (see Patent Document 6), and a milking system in which a pipe through which milk from a milk claw is discharged has a large inner diameter (see Patent Document 7).

Further, Non-Patent Document 1 discloses an average vacuum pressure preferable for a short milk tube part and a mouthpiece part.
Patent Document 1: Japanese Patent No. 4359708
Patent Document 2: US Patent No. 6776120, Specification
Patent Document 3: US Patent No. 8627785, Specification
Patent Document 4: Japanese Unexamined Patent Application (Translation of PCT Application), Publication No. 2016-073861
Patent Document 5: US Patent No. 3476085, Specification
Patent Document 6: U.S. Published Patent Application Publication, No. 2014-020930, Specification
Patent Document 7: US Patent No. 5896827, Specification

Non-Patent Document 1: M.D.Rasmussen, N.P.Madsen, Effects of Milkline Vacuum, Pulsator Airline Vacuum, and Cluster Weight on Milk Yield, Teat Condition, and Udder Health, Journal of Dairy Science, U.S.A, American Dairy Science Association, January 2000, Vol. 83, Issue 1, pp. 77-84. DE 100 56 224 A1 and DE 10 2007 053230 A1 disclose respectively a liner according to the preamble of claim 1, showing a vent in the mouthpiece part, and a vent line provided as a groove on an inner surface of the liner extending on the bore part.

### DISCLOSURE OF THE INVENTION

### Problems to be Solved by the Invention

However, the teat cup disclosed in Patent Document 1 has a complex structure and is not easy to produce. The teat cup disclosed in Patent Document 2 is not sufficiently effective in preventing backflow. Regarding the teat cups of Patent Documents 3, 4, and 5, there is a strong possibility that the vent provided at the mouthpiece part or the short milk tube part is clogged by refuse and will not function. According to Patent Documents 6 and 7, the milk claw is not easy to carry due to the claw's large size and will be difficult to attach to the teats of a cow.

It is an object of the present invention to provide a liner, a teat cup, and a milking device that can further reliably and effectively curb backflow of milk to reduce the risk of infection of mastitis.

### Means for Solving the Problems

To achieve the above object, the present invention provides a liner for a teat cup of a milking device, the liner having having the features of independent claim 1. Particular embodiments and further developments are set out in the dependent claims.

Further, to achieve the above object, the present invention provides a teat cup including the liner and the shell.

Furthermore, to achieve the above object, the present invention provides a milking device including the teat cup and a milk claw to which the short milk tube part is coupled.

### Effects of the Invention

The present invention provides a liner, a teat cup, and a milking device that can further reliably and effectively curb backflow of milk to reduce the risk of infection of mastitis.

### BRIEF DESCRIPTION OF THE DRAWINGS

FIG. 1 is a longitudinal cross-sectional view of a portion of a milking device 10 having a liner 3 according to an embodiment;
FIG. 2 is a diagram illustrating a milking system 100 including the milking device 10 having the liner 3 according to the embodiment;
FIG. 3 is a partial cross-sectional view showing, on an enlarged scale, a mouthpiece part 3a and a bore part 3b of the liner 3 not having a teat 50 inserted therein;
FIG. 4 is a cross-sectional view taken along line A-A in FIG. 3;
FIG. 5 shows a different configuration of a protruded line 3g;
FIG. 6 is a table showing results of measurements conducted using artificial teats each inserted into the liner 3 and pressed onto the inner surface of the bore part 3b, so that a depth d' by which a portion of each artificial teat sank into a vent line 3f was measured;
FIG. 7 is a table showing results of a first experiment for evaluating an effect exerted in a case where a vent line 3f is provided on the liner 3;
FIG. 8 is a table showing results of a second experiment for evaluating an effect exerted in a case where a claw vent 36 is provided;
FIG. 9 is a table showing results of a third experiment for evaluating an effect exerted in a case where a short milk tube vent 3da is provided;
FIG. 10A illustrates a modification of the embodiment;
FIG. 10B illustrates a modification of the embodiment;
FIG. 10C illustrates a modification of the embodiment;
FIG. 10D illustrates a modification of the embodiment;
FIG. 10E illustrates a modification of the embodiment;
FIG. 10F illustrates a modification of the embodiment;
FIG. 10G illustrates a modification of the embodiment;
FIG. 10H illustrates a modification of the embodiment;

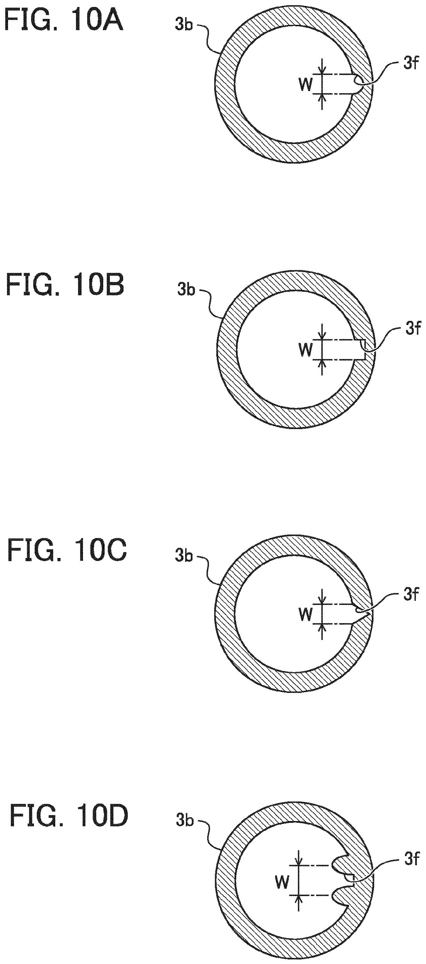

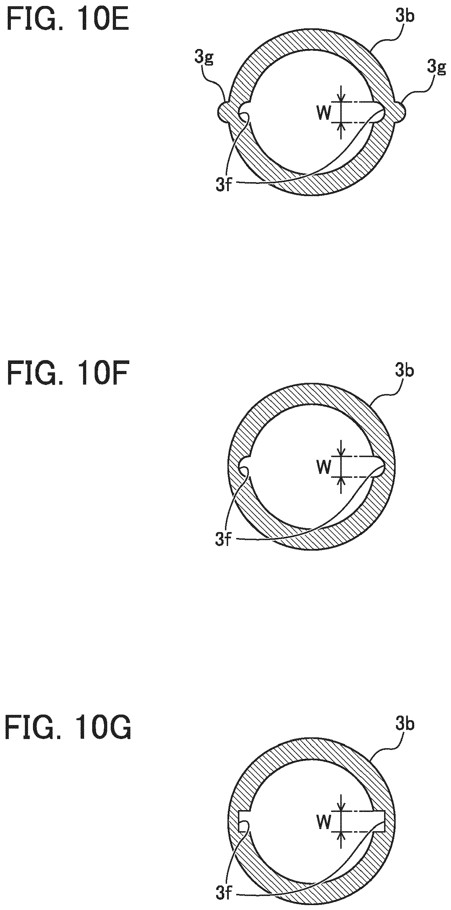

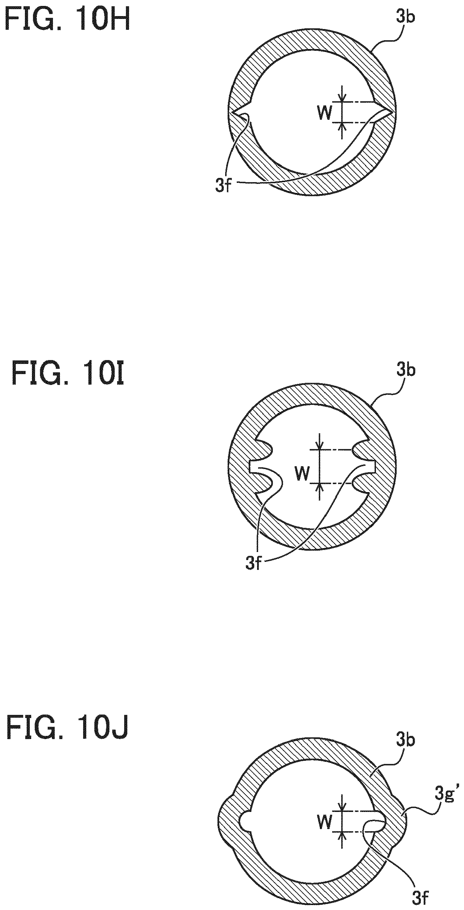

FIG. 10Iillustrates a modification of the embodiment;
FIG. 10J illustrates a modification of the embodiment; and

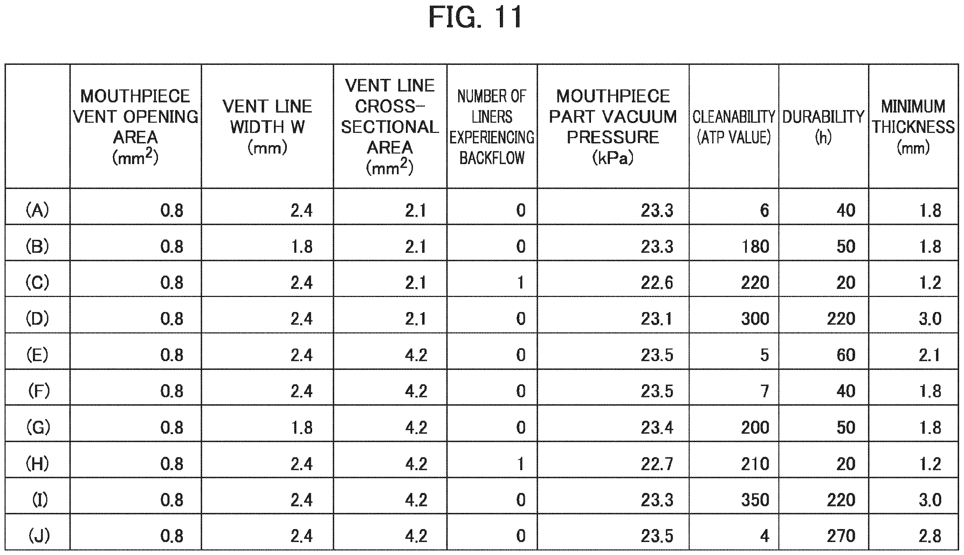

FIG. 11 is a table showing results of an experiment for evaluating effects exerted by the modifications.

### PREFERRED MODE FOR CARRYING OUT THE INVENTION

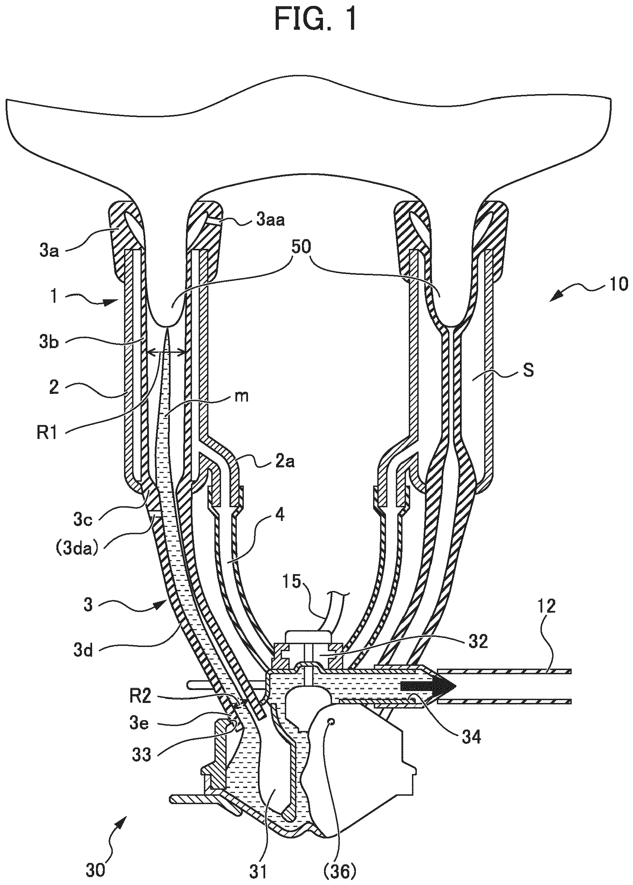

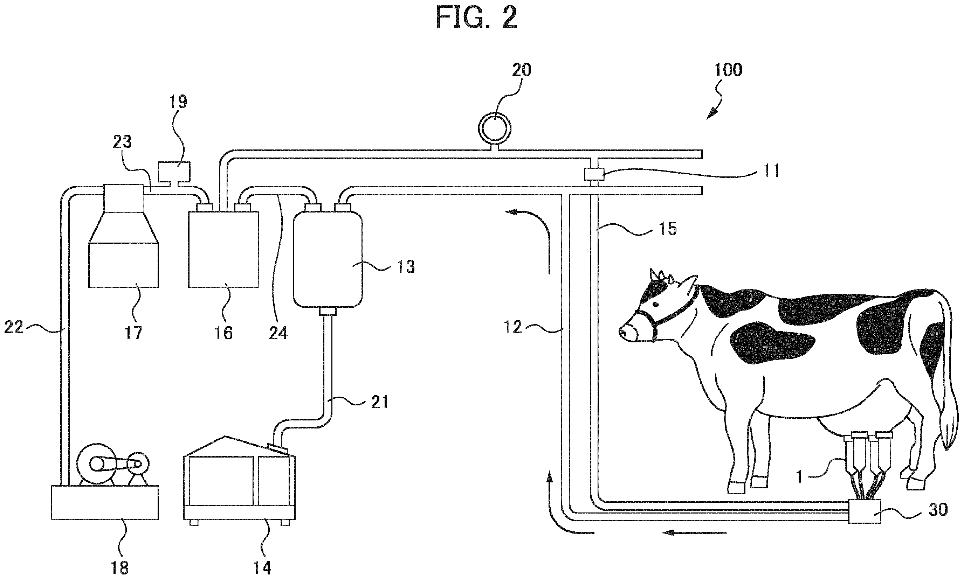

An embodiment of the present invention will be described below. FIG. 1 is a longitudinal cross-sectional view of a portion of a milking device 10 having a liner 3 according to the embodiment. The milking device 10 includes a plurality of teat cups 1 and a milk claw 30. FIG. 1 also shows cow teats 50 inserted in the teat cups 1. FIG. 2 is a diagram illustrating a milking system 100 including the milking device 10 having the liner 3 according to the embodiment.

### (Teat Cup 1)

FIG. 1 shows two teat cups 1. However, this is a non-limiting example. The milking device 10 may include four or six teat cups 1.

The teat cup 1 includes a cylindrical liner 3 and a shell 2 that covers an outer periphery of an upper portion of the liner 3.

### (Shell 2)

The shell 2 is a cylindrical member made of a hard material (e.g., stainless steel or a hard resin) which does not deform due to changes in inner pressure. The shell 2 includes, on a side surface thereof, a coupling port 2a that is connected to a pressure regulating chamber 32 of the milk claw 30 (to be described later) via a pipe 4.

### (Liner 3)

The liner 3 is a cylindrical one-piece member made of a flexible material. The liner 3 includes, in a top-to-bottom direction, a mouthpiece part 3a, a bore part 3b, and a short milk tube part 3d.

### (Mouthpiece part 3a)

The mouthpiece part 3a is provided on an upper end portion of the liner 3, closes an upper end of the shell 2, and serves as an insertion port through which the cow teat 50 is inserted.

### (Bore part 3b)

The bore part 3b is configured to receive therein the teat 50 inserted through the mouthpiece part 3a, extends downward continuously from the mouthpiece part 3a, and has an outer periphery covered with the shell 2. A space S is formed between the outer surface of the bore part 3b and the inner surface of the shell 2. The bore part 3b is elastically deformable between an open state and a closed state according to changes in pressure in the space S.

### (Short Milk Tube part 3d)

The short milk tube part 3d is configured to allow milk m sucked from the teat 50 to flow therethrough. The short milk tube part 3d includes, in its upper end portion continuous with the bore part 3b, a thick-walled portion 3c as a coupling portion in which the short milk tube part 3d is coupled to the bore part 3b, the thick-walled portion 3c retaining a lower end of the shell 2. The short milk tube part 3d extends downward from the thick-walled portion 3c, and has a lower end functioning as an inlet part 3e connectable to the milk claw 30 to be described later (see FIG. 1).

As shown in FIG. 1, the inlet part 3e has an inner diameter R2 smaller than the inner diameters of any other portions of the short milk tube part 3d. However, in the short milk tube part 3d, the portion below the thick-walled portion 3c may have a constant diameter that is equal to the inner diameter R2 of the inlet part 3e.

### (Milk Claw 30)

The milk claw 30 includes a milk chamber 31 and the pressure regulating chamber 32. The milk chamber 31 includes an inlet insertion port 33 into which the inlet part 3e of the short milk tube part 3d is inserted. Flows of milk m from the plurality of liners 3 meet in the milk chamber 31. The milk m gathered in the milk chamber 31 of the milk claw 30 passes through a milk line 12 connected to a discharge port 34, and then, flows into a milk receiver 13 shown in FIG. 2.

The pressure regulating chamber 32 is disposed above the milk chamber 31. The pressure regulating chamber 32 is connected to the pipe 4 extending from the coupling port 2a described above, and to a pulsator line 15 extending to a pulsator 11 to be described later (see FIG. 2). When the pulsator 11 is in operation, a pulsation pressure for milking is provided to the space S between the outer surface of the bore part 3b and the inner surface of the shell 2 through the pulsator line 15 and the pipe 4.

### (Milking System 100)

As shown in FIG. 2, the milking system 100 includes the teat cups 1, the milk claw 30, the pulsator line 15, and the milk line 12 that have been described above. The milking system 100 further includes the milk receiver 13, a bulk cooler 14, a trap 16, a vacuum tank 17, a vacuum pump 18, the pulsator 11, and other components such as a vacuum pressure regulator 19 and a vacuum gauge 20.

Note that in Examples and Comparative Examples to be described later, a "low-level" milking system was used, in which the milk line 12 extending from the milking system 100 to the milk receiver 13 is located below the milk claw 30.

### (Pulsator 11)

The pulsator 11 is connected to the pressure regulating chamber 32 of the milk claw 30 via the pulsator line 15. The pulsator 11 performs control to introduce and discharge, at regular time intervals, air into and from the space S formed between the outer surface of the bore part 3b and the inner surface of the shell 2 and connected to the pressure regulating chamber 32 via the pipe 4. The pressure regulation performed in the space S in this manner causes the bore part 3b to open and close.

Specifically, when air in the space S is discharged, the pressure in the space S becomes equal to the pressure in the bore part 3b, whereby the bore part 3b is brought into the open state. On the other hand, when air flows into the space S, the pressure in the space S increases, whereby the bore part 3b becomes deflated to be brought into the closed state. The expansion and contraction of the bore part 3b, which result in the alternation of the open state and the closed state, provide a massage effect to the teat. The effect provided in this way is similar to the effect of massage given by a calf drinking milk by sucking a teat of the mother cow, whereby milk ejection is promoted.

### (Milk Receiver 13)

The milk receiver 13 is a container for temporarily reserving milk m conveyed from the milk claw 30 through the milk line 12.

### (Bulk Cooler 14)

The bulk cooler 14 is a component for storing the milk m that has been reserved in the milk receiver 13 and conveyed from a bottom portion of the milk receiver 13 through a pipe 21.

### (Vacuum Pump 18)

The vacuum pump 18 is connected to the milk claw 30 via a vacuum pipe 22 and other components.

In the milking system 100 of the present embodiment, the vacuum pump 18 is also connected to the vacuum tank 17 via the vacuum pipe 22. The vacuum tank 17 is connected to the trap 16 via a vacuum pipe 23 to which the vacuum pressure regulator 19 is mounted. The trap 16 is connected to the milk receiver 13 via a vacuum pipe 24, and to the milk claw 30 via the pulsator 11.

The inlet part 3e of the short milk tube part 3d is inserted into the inlet insertion port 33 of the milk claw 30. The milk line 12 is attached to the discharge port 34 of the milk claw 30. The coupling port 2a on a side portion of the shell 2 is connected to the pressure regulating chamber 32 of the milk claw 30 via the pipe 4. The pressure regulating chamber 32 of the milk claw 30 is connected to the pulsator 11 via the pulsator line 15.

Thereafter, the teat 50 is inserted into the bore part 3b through the mouthpiece part 3a.

In this state, the vacuum pump 18 continuously provides a vacuum pressure for milking to the interior of the liner 3, while the pulsator 11 provides a pulsating vacuum pressure to the space S.

This pulsating vacuum pressure causes the bore part 3b to expand and contract. As a result, lactation is promoted, so that milk m is ejected from the teat 50 to the interior space of the bore part 3b. The ejected milk m is conveyed to the milk line 12 via the milk claw 30.

### (Mouthpiece vent 3aa)

The liner 3 of the embodiment includes a mouthpiece vent 3aa provided on the mouthpiece part 3a. In addition to the mouthpiece vent 3aa, vents may be provided on the short milk tube part 3d and the milk claw 30. FIG. 1 shows a short milk tube vent 3da provided on a side surface of the thick-walled portion 3c of the short milk tube part 3d and a claw vent 36 provided on a side surface of the milk claw 30. The respective reference characters of these vents are parenthesized in FIG. 1.

### (Vent Line 3f)

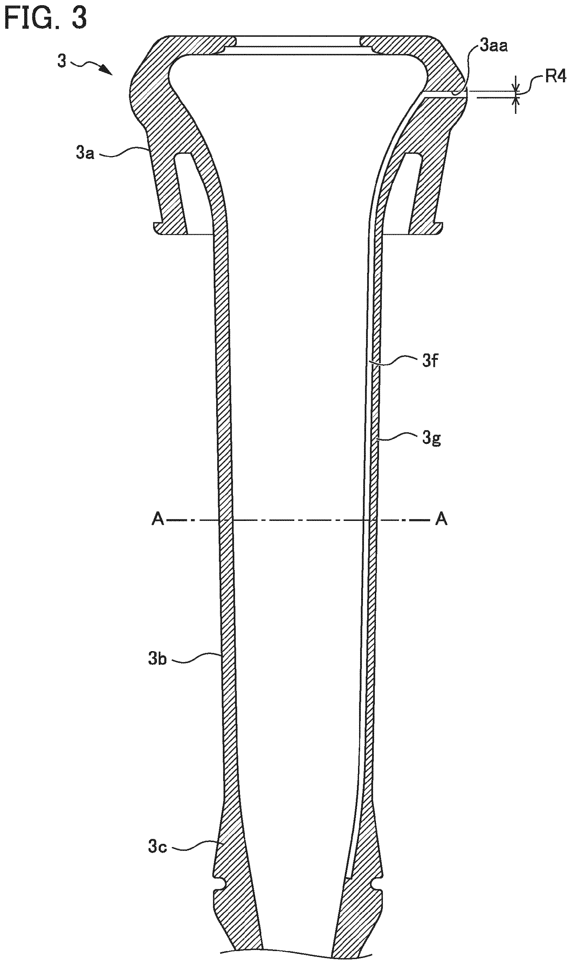

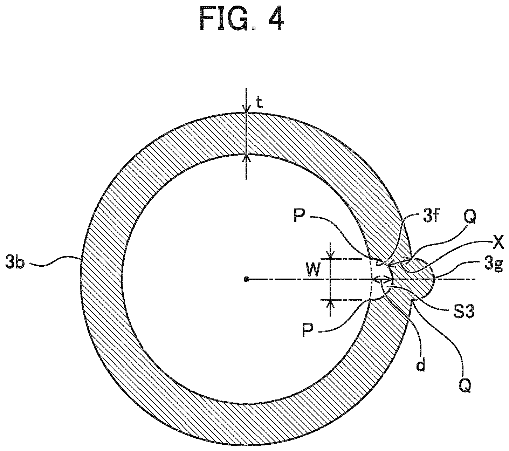

FIG. 3 is a partial cross-sectional view showing, on an enlarged scale, the mouthpiece part 3a and the bore part 3b of the liner 3 not having a teat 50 inserted therein. FIG. 4 is a cross-sectional view taken along line A-A in FIG. 3.

### (Range of Extension of Vent Line 3f)

A vent line 3f is provided on a portion of an inner surface, the portion extending from the mouthpiece vent 3aa to the thick-walled portion 3c, which is located at the lower end of the bore part 3b and in which the bore part 3b is coupled to the short milk tube part 3d. The vent line 3f is provided as a groove having a semicircular shape in a cross-section perpendicular to a longitudinal direction of the bore part 3b, and linearly extends along the inner surface of the bore part 3b to reach the thick-walled portion 3c. The vent line 3f of the embodiment extends linearly. However, this is a non-limiting example. For example, the vent line 3f may extend helically.

### (Number of Vent Lines 3f)

In the embodiment, one vent line 3f is provided in conformity with the number of the mouthpiece vent 3aa. In a case where a plurality of mouthpiece vents 3aa are provided, the same number of vent lines 3f as the number of the mouthpiece vents 3aa may be provided. In that case, the mouthpiece vents 3aa and the vent lines 3f are preferably arranged equidistantly in a circumferential direction.

### (Protruded line 3g)

In the embodiment, the bore part 3b includes a protruded line 3g on an outer surface of a portion of the bore part 3b, the portion being provided with the vent line 3f on an inner surface thereof.

Referring to FIG. 4, when viewed in cross-section, the protruded line 3g shown in FIG. 4 is radially aligned with the vent line 3f, and protrudes from the outer surface of the bore part 3b so as to have a shape substantially identical to the shape of the recess of the vent line 3f.

The protruded line 3g linearly extends along the outer surface of the bore part 3b from the mouthpiece vent 3aa to the thick-walled portion 3c as the coupling portion, like the vent line 3f.

As a result of the provision of the vent line 3f on the inner surface of the bore part 3b, the bore part 3b has a small thickness in the portion where the vent line 3f extends, which may give rise to the risk of a decrease in the strength of the bore part 3b. However, provision of the protruded line 3g on the outer surface of the portion where the vent line 3f is provided can prevent such a decrease in the strength of the bore part 3b, making it possible to improve durability.

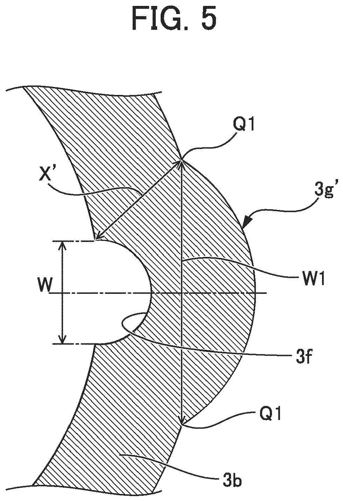

FIG. 5 shows a protruded line 3g' having a different configuration. Like the protruded line 3g shown in FIG. 4, the protruded line 3g' is radially aligned with the vent line 3f. The protruded line 3g' protrudes from the outer surface of the bore part 3b in the same amount as that of the protruded line 3g shown in FIG. 4.

On the other hand, the shape of the protruded line 3g' of FIG. 5 does not substantially correspond to the recess of the vent line 3f. The width W1 of the protruded line 3g' is wider than the width W of the vent line 3f. The curvature of the outer surface of the protruded line 3g' is gentler than that of the inner surface of the recess of the vent line 3f. Referring to the cross-sectional view of FIG. 5, the width W1 of the protruded line 3g' denotes a distance between two corners (inflection points Q1) at which the outer surface of the bore part 3b changes to the outer surface of the protruded line 3g'.

In the case of the protruded line 3g shown in FIG. 4, at a corner (inflection point Q) at which the outer surface of the bore part 3b changes to the outer surface of the protruded line 3g, a distance X between the inner surface of the vent line 3f and the outer surface of the protruded line 3g is short, that is, the bore part 3b has a small thickness there. The bore part 3b of the embodiment has a thickness t of about 3.0 mm, whereas the distance X, i.e., the minimum thickness of the bore part 3b is 2.1 mm.

On the other hand, regarding the protruded line 3g' shown in FIG. 5, at the corner (inflection point Q1) where the outer surface of the bore part 3b changes to the outer surface of the protruded line 3g', a distance X' between the inner surface of the vent line 3f and the outer surface of the protruded line 3g' is longer than that of the protruded line 3g shown in FIG. 4, which means that the variation in the thickness of the bore part 3b is small. In the embodiment, the thickness t of the bore part 3b is about 3.0 mm, whereas the minimum thickness X' of the bore part 3b is 2.8 mm.

If the bore part 3b has a portion with a small thickness, stress tends to concentrate on the portion, making it likely for cracks to appear. However, in the case of the protruded line 3g' shown in FIG. 5, the thickness of the bore part 3b decreases at a lower decrease rate even at the inflection point Q1, in comparison with the case of the protruded line 3g shown in FIG. 4, making it less likely for stress to concentrate. As a result, the protruded line 3g' shown in FIG. 5 contributes to a further increase in durability, as compared with the protruded line 3g shown in FIG. 4.

### (Depth of Vent Line 3f)

The vent line 3f, which has a semicircular shape in a cross-section perpendicular to the longitudinal direction of the bore part 3b, has a radius (i.e., a depth d of the groove) that is preferably equal to or smaller than the thickness t of the bore part 3b, and more preferably, equal to or smaller than 1/2 of the thickness t of the bore part 3b, although the protruded line 3g of FIG. 4 and the protruded line 3g' of FIG. 5 reinforce the strength.

Since the thickness t of the bore part 3b of the embodiment is about 3.0 mm, it is more preferable that the depth d of the vent line 3f is 1.5 mm or less (while the width W is 3.0 mm or less).

Referring to FIG. 4, the width W of the vent line 3f denotes the length of a straight line connecting two inflection points at which a path of a circumference extending along the inner surface of the bore part 3b having a predetermined radius changes to a path of a circumference extending along the inner surface of the vent line 3f and having a radius d. The depth d of the vent line 3f denotes the length of a perpendicular line from a deepmost point on the inner surface of the vent line 3f to the above-mentioned straight line.

### (Cross-Sectional Area of Vent Line 3f)

In the embodiment, the mouthpiece vent 3aa has a diameter R4 of 0.5 mm to 1.0 mm. Accordingly, the mouthpiece vent 3aa has an opening area of about 0.2 mm² to about 0.8 mm².

Preferably, the vent line 3f has a vent line cross-sectional area S3 that allows all air introduced through the mouthpiece vent 3aa to flow. Specifically, the vent line cross-sectional area S3 is preferably equal to or larger than the opening area of the mouthpiece vent, i.e., 0.2 mm² to 0.8 mm² or greater in the embodiment.

The vent line cross-sectional area S3 is determined in a cross-section perpendicular to the longitudinal direction of the bore part 3b provided with the vent line 3f, and calculated by subtracting an area of a hollow portion of the bore part 3b having a circular cross-section in an imaginary case where the vent line 3f is not provided, from an area of a hollow portion of the bore part 3b provided with the vent line 3f. In other words, the vent line cross-sectional area S3 is a cross-sectional area of the hollow portion of the vent line 3f alone.

### (Shape of Vent Line 3f)

Even though the vent line cross-sectional area S3 is equal to or larger than the opening area of the mouthpiece vent 3aa, the amount of air passing through the vent line is always less than the amount of air introduced through the mouthpiece vent 3aa. Therefore, the vent line cross-sectional area S3 is not particularly limited in terms of upper limit.

However, as will be described below, the width W and the shape of the vent line 3f are restricted in view of the fact that a portion of the teat 50 can sink into the vent line 3f due to its softness.

As shown in FIG. 1, when practically used, the bore part 3b receives the teat 50 inserted therein. At that time, if the teat 50 is large in size, the teat 50 is pressed onto the inner surface of the bore part 3b and a portion of the teat 50 sinks into the vent line 3f, resulting in a decrease in an area allowing for flow of air in the vent line cross-sectional area S3.

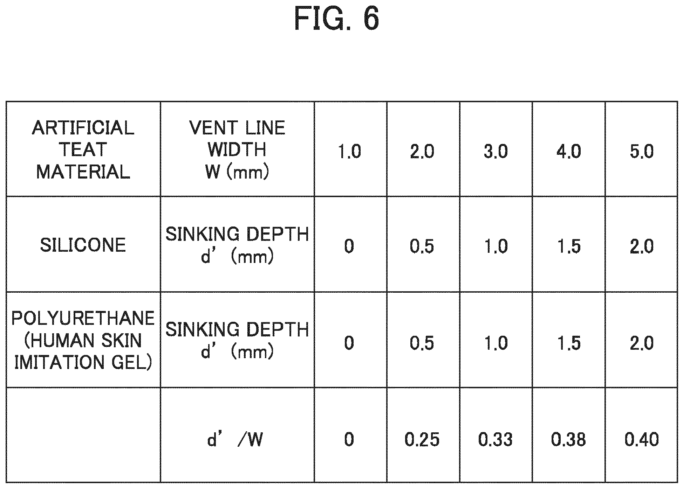

FIG. 6 is a table showing results of measurements conducted using artificial teats each inserted into the liner 3 and pressed onto the inner surface of the bore part 3b, so that a depth d' by which a portion of each artificial teat sank into the vent line 3f was measured. The artificial teats included two types, namely, teats of silicone and teats of polyurethane (human skin imitation gel). The artificial teats of both types have an Asker C hardness of 0 (a hardness approximate to that of a real teat).

As shown in the table of FIG. 6, a ratio d'/W of the depth d' by which a portion of the artificial teat pressed onto the inner surface of the bore part 3b sank into the vent line 3f, with respect to the width W of the vent line 3f increases with an increase in the width W of the vent line 3f.

This means that when the width W of the vent line 3f is excessively wide, a considerably large region of the vent line 3f may be blocked by the teat. Accordingly, although depending on the depth of the vent line 3f, it is preferable that the ratio d'/W is less than 0.40, i.e., the width W of the vent line 3f is 4.0 mm or less.

Although the shape of the vent line 3f of the embodiment is semicircular, this is a non-limiting example. The vent line 3f may have various shapes as will be described later. Nevertheless, from the viewpoint of preventing the teat 50 from partially sinking into the vent line 3f, it is preferable that the vent line 3f has the inflection points P at positions where the path of the circumference extending along the inner surface of the bore part 3b having the predetermined radius changes to the path of the circumference extending along the inner surface of the vent line 3f and having the radius d, as shown in FIG. 4. The inflection points P are provided at two locations on both sides of the vent line 3f.

Specifically, it is preferable that the contour of the circumference extending along the inner surface of the bore part 3b and having the predetermined radius and the contour along the inner surface of the vent line 3f join with each other while forming an angle (inflection point P) therebetween, instead of gently continuing with each other.

From the viewpoint of ensuring an air passage, a ratio d/W of the depth d of the vent line to the width W of the vent line is preferably large. Specifically, the ratio d/W is preferably equal to or greater than 1/2 in the case where the vent line 3f has a semicircular shape.

Even when the bore part 3b collapses, the vent line cross-sectional area S3 remains unchanged because the cross-sectional shape of the vent line is elongated in a direction perpendicular to the collapsing direction.

### (Effects)

According to the embodiment, due to the provision of the mouthpiece vent 3aa, air is caused to flow from the mouthpiece vent 3aa toward the teat 50 or toward the milk claw 30, whereby backflow of milk can be inhibited. The provision of the mouthpiece vent 3aa makes it possible to bring milk into a gas-liquid mixture state from the vicinity of the teat. Thus, the mouthpiece vent 3aa is more effective in curbing backflow than the other vents. In addition, since air is constantly introduced into the liner, changes in pressure in the bore part (expansion/contraction portion) can be reduced.

However, in a case where only the mouthpiece vent 3aa is provided without the vent line 3f, if the teat 50 is large in size, the teat 50 blocks the bore part 3b, inhibiting the vacuum pump 18 from sufficiently suctioning the mouthpiece part 3a. When the bore part 3b abruptly opens by pulsation of the vacuum pump 18, the pressure in the mouthpiece part 3a may become lower than a proper vacuum pressure (e.g., 20 kPa).

In such a case, the mouthpiece part 3a comes to have a relatively low vacuum pressure (a small negative pressure value) in the liner. This may result in improper sucking of milk and occurrence of backflow of milk.

To address this, the embodiment includes the vent line 3f extending from the mouthpiece vent 3aa, so that the bore part 3b is prevented from being blocked by the teat 50. Therefore, the vacuum pump 18 can sufficiently suction the mouthpiece part 3a. When the bore part 3b opens, the pressure in the mouthpiece part 3a can be maintained at a proper pressure higher than 20 kPa.

Thus, the effect of the provision of the mouthpiece vent 3aa can be exerted sufficiently. That is, the flow of air is produced from the mouthpiece vent 3aa toward the teat 50 or the milk claw 30, so that backflow of milk can be curbed.

### (First Experiment)

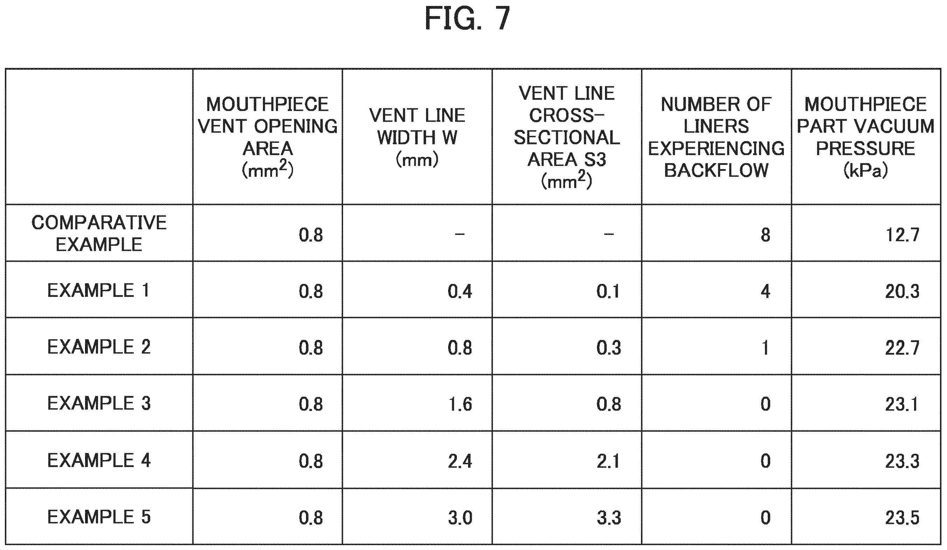

Next, a first experiment for evaluating an effect exerted in the case where the vent line 3f is provided on the liner 3 will be described. The results of the first experiment are shown in the table in FIG. 7.

For the first experiment, five types of liners 3 (Examples 1 to 5) were prepared. The liners 3 were the same in terms of the opening area (0.8 mm²) of the mouthpiece vent 3aa provided on the mouthpiece part 3a, but differed from each other in the cross-sectional area S3 of the vent line 3f. Teat cups 1 including the liners 3 of the Examples were attached to the milking devices 10, and were used in milking ten times. The number of occurrences of backflow of milk was counted.

Liners of a Comparative Example were the same as those of the Examples in terms of the opening area (0.8 mm²) of the mouthpiece vent provided on the mouthpiece part, but were not provided with the vent line. Teat cups including the liners of the Comparative Example were used in milking ten times in the same manner. The number of occurrences of backflow of milk were counted.

The liners of the Examples and the Comparative Example subjected to the first experiment included only the mouthpiece vent 3aa without any other vents. The mouthpiece vent 3aa as the single vent was provided at a location distant by 10 mm from the upper end of the liner 3, and had a circular shape with an opening area of 0.8 mm² (and a diameter of 1.0 mm).

The vent line 3f was provided as the single vent line, in conformity with the number of the mouthpiece vent 3aa. The vent line 3f was continuous with the mouthpiece vent 3aa, linearly extended to the thick-walled portion at the lower end of the bore part 3b, and had a semicircular shape in cross-section. The radius of the semicircular shape of Example 1 was 0.4 mm, that of Example 2 was 0.8 mm, that of Example 3 was 1.6 mm, that of Example 4 was 2.4 mm, and that of Example 5 was 3.0 mm.

Measurement was conducted ten times for each of the Examples, so that the number of liners experiencing backflow was counted.

Further, a vacuum pressure in the mouthpiece part 3a was measured ten times, and an average value was determined. The vacuum pressure is an absolute value of a pressure in the mouthpiece part 3a when an atmospheric pressure is defined as 0 kPa, and is a negative pressure because the vacuum pump 18 suctions the interior of the liner 3.

As shown in the table of FIG. 7, in the Comparative Example including no vent line 3f, the vacuum pressure was 12.7 kPa, and the number of liners experiencing backflow was eight out of the ten liners.

Thus, it is presumed that, since the bore part 3b of the Comparative Example would be blocked by the teat 50, air introduced through the mouthpiece vent 3aa could not flow into the bore part 3b, thereby preventing the mouthpiece vent 3aa from exerting the effect. It is also possible that the backflow occurred when the bore part 3b opened.

In contrast, in all of Examples 1 to 5, the vacuum pressure was 20 kPa or higher, i.e., within the proper pressure range. The number of liners experiencing back flow was four or less.

Thus, it is presumed that in Examples 1 to 5, the vent line 3f provided thereto would ensure an air passage even when the bore part 3b received the teat 50 inserted therein. It is also presumed that a small pressure change would occur in the mouthpiece part 3a when the bore part 3b opened, making it unlikely for backflow to occur.

The results described above verify that provision of the vent line 3f can curb backflow.

### (Preferred Range)

In Example 1 in which the vent line cross-sectional area S3 was 0.1 mm² which was considerably smaller than the mouthpiece vent opening area (0.8 mm²), the vacuum pressure was 20.3 kPa and four liners experienced backflow. In Example 2 in which the vent line cross-sectional area S3 was 0.3 mm² which was smaller than the mouthpiece vent opening area (0.8 mm²), the vacuum pressure was 22.7 kPa and one liner experienced backflow.

On the other hand, in Examples 3 to 5 in which the vent line cross-sectional area S3 was equal to or larger than the mouthpiece vent opening area, the vacuum pressure in the mouthpiece part 3a increased with an increase in the vent line cross-sectional area S3. In each of Examples 3 to 5, none of the liners experienced backflow.

The results described above verify that the vent line cross-sectional area S3 is preferably equal to or larger than the mouthpiece vent opening area.

### (Second Experiment)

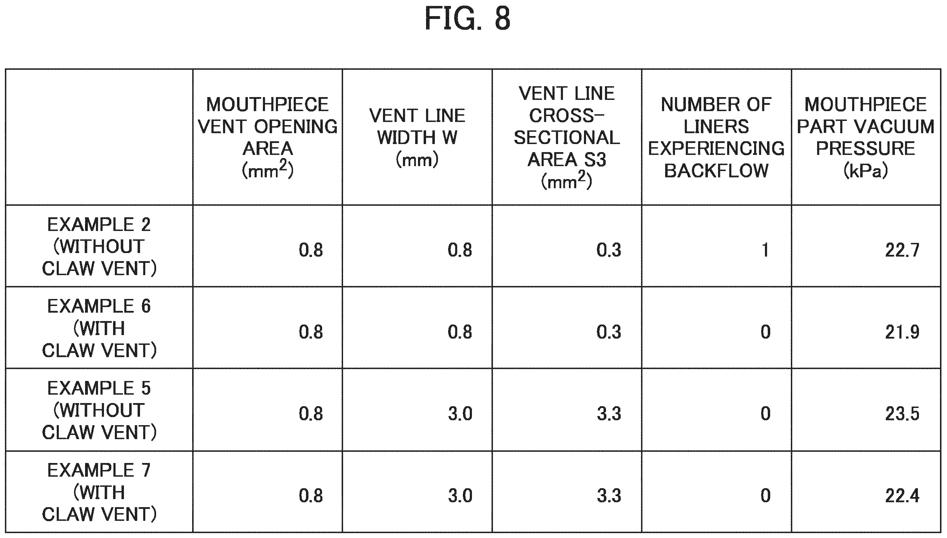

Next, a second experiment for evaluating an effect exerted by the provision of the claw vent 36 as an additional vent, in addition to the mouthpiece vent 3aa and the vent line 3f, will be described. The claw vent 36 is shown in FIG. 1 with the parenthesized reference character. The results of the second experiment are shown in the table in FIG. 8.

The Examples subjected to the second experiment were the same as those subjected to the first experiment, except that the Examples subjected to the second experiment included the clow vent 36 provided on a side surface of the milk claw 30. One claw vent 36 was provided which had, in cross-section, a circular shape with a diameter of 1.0 mm.

The second experiment was conducted in the same manner as the first experiment. Specifically, two types of liners 3 (Examples 6 and 7) that differed from each other in the cross-sectional area of the vent line 3f were prepared. Teat cups 1 including these liners 3 and the milk claw 30 provided with the claw vent 36 were attached to the milking devices 10, and were used in milking ten times. The number of occurrences of backflow of milk was counted.

As Comparative Examples, FIG. 8 also shows Example 2 that is the same as Example 6 in terms of the cross-sectional area of the vent line 3f, and Example 5 that is the same as Example 7 in terms of the cross-sectional area of the vent line 3f.

As shown in FIG. 8, in Examples 6 and 7 including the milk claw 30 provided with the claw vent 36, the vacuum pressure in the mouthpiece part 3a was slightly lower than that of Examples 2 and 5 including the milk claw 30 without the claw vent 36. On the other hand, one liner of Example 2 experienced backflow, whereas none of the liners of the Example 6 experienced backflow. These results verify that additional provision of the claw vent 36 enhances the effect of curbing backflow.

### (Third Experiment)

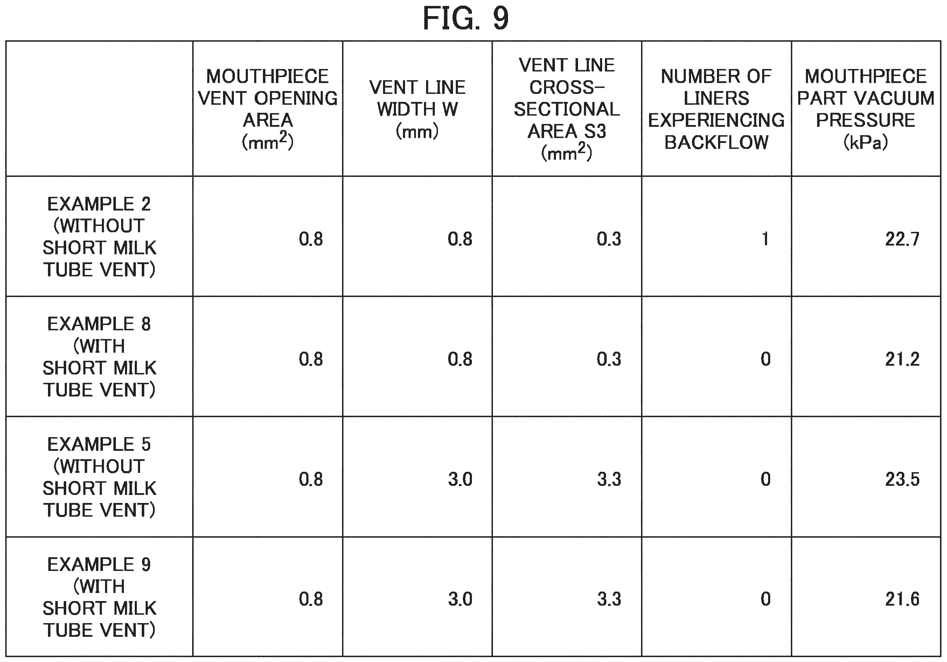

Next, a third experiment for evaluating an effect exerted by the provision of the short milk tube vent 3da as an additional vent, in addition to the mouthpiece vent 3aa and the vent line 3f, will be described. The short milk tube vent 3da is shown in FIG. 1 with the parenthesized reference character. The results of the third experiment are shown in the table in FIG. 9.

The Examples subjected to the third experiment were the same as those subjected to the first experiment, except that the Examples subjected to third experiment included the short milk tube vent 3da provided in an upper portion of the short milk tube part 3d. One short milk tube vent 3da provided had, in cross-section, a circular shape with a diameter of 0.5 mm.

The third experiment was conducted in the same manner as the first experiment. Specifically, two types of liners 3 (Examples 8 and 9) that included the short milk tube vent 3da provided in the upper portion of short milk tube part 3d and that differed from each other in the cross-sectional area of the vent line 3f were prepared. Teat cups 1 including the liners 3 were attached to the milking devices 10, and were used in milking ten times. The number of occurrences of backflow of milk was counted.

As Comparative Examples, FIG. 9 also shows Example 2 that is the same as Example 8 in terms of the cross-sectional area of the vent line 3f, and Example 5 that is the same as Example 9 in terms of the cross-sectional area of the vent line 3f.

As shown in FIG. 9, in Examples 8 and 9 including the short milk tube vent 3da, the vacuum pressure in the mouthpiece part 3a was slightly lower than that of Examples 2 and 5 including no short milk tube vent 3da. On the other hand, one liner of Example 2 experienced backflow, whereas none of the liners of the Example 8 experienced backflow. These results verify that additional provision of the short milk tube vent 3da enhances the effect of curbing backflow.

### (Modifications)

In the embodiment described above, the vent line 3f has the semicircular shape in cross-section, and the bore part 3b is provided with the protruded line 3g or the protruded line 3g' that is located outward with respect to the vent line 3f and radially aligned with the vent line 3f, as shown in FIGS. 4 and 5.

However, this is a non-limiting example. While the provision of the protruded line 3g or the protruded line 3g' increases the strength of the bore part 3b, if the bore part 3b provided with the vent line 3f has a sufficient thickness in the portions excluding the portion provided with vent line 3f, the protruded line 3g or the protruded line 3g' may be omitted.

Further, the cross-sectional shape of the vent line 3f is not limited to the semicircular shape, but may be any other shape. FIGS. 10A to 10J illustrate modifications of the embodiment.
(A) shows Modification 1 in which the vent line 3f has a semicircular shape in cross-section, while the bore part 3b is not provided with the protruded line 3g at a position located outward with respect to the vent line 3f and radially aligned with the vent line 3f.
(B) shows Modification 2 in which the vent line 3f has a rectangular shape in cross-section, while the bore part 3b is not provided with the protruded line 3g at a position located outward with respect to the vent line 3f and radially aligned with the vent line 3f.
(C) shows Modification 3 in which the vent line 3f has a triangular shape in cross-section, while the bore part 3b is not provided with the protruded line 3g at a position located outward with respect to the vent line 3f and radially aligned with the vent line 3f.
(D) shows Modification 4 in which the vent line 3f is not formed as a cutout in the vent line 3f, but is provided between two ridges formed on the inner surface of the bore part 3b. In this case, the protruded line 3g does not need to be provided in a radially outward position.
   When the vent line 3f is formed by providing the two ridges on the inner surface of the bore part 3b in this manner, the width of the vent line 3f is defined by a distance between the ends of the two ridges. The depth of the vent line 3f is defined by the length of a perpendicular line extending from a deepmost point on the inner surface of the bore part 3b defining the vent line 3f to a straight line connecting the ends of the two ridges.
(E) shows Modification 5 in which two vent lines 3f and two protruded lines 3g that are the same as the vent line 3f and the protruded line 3g of the embodiment shown in FIG. 4 are provided symmetrically with respect to an axis of the bore part 3b.
(F) shows Modification 6 in which two vent lines 3f that are the same as the vent line 3f of Modification 1 are provided symmetrically with respect to an axis of the bore part 3b.
(G) shows Modification 7 in which two vent lines 3f that are the same as the vent line 3f of Modification 2 are provided symmetrically with respect to an axis of the bore part 3b.
(H) shows Modification 8 in which two vent lines 3f that are the same as the vent line 3f of Modification 3 are provided symmetrically with respect to an axis of the bore part 3b.
(I) shows Modification 9 in which two vent lines 3f that are the same as the vent line 3f of Modification 4 are provided symmetrically with respect to an axis of the bore part 3b.
(J) shows Modification 10 in which two vent lines 3f and protruded lines 3g' that are the same as the vent line 3f and the protruded line 3g' of the embodiment shown in FIG. 5 are provided symmetrically with respect to an axis of the bore part 3b.

Effects of the Modifications were evaluated by way of an experiment. The results are shown in FIG. 11. The experiment was conducted under the same conditions as in the first experiment described above. Liners 3 were prepared which were the same in terms of the opening area (0.8 mm²) of the mouthpiece vent 3aa provided on the mouthpiece part 3a, and had the vent line(s) 3f of the respective modification.

The width W of the vent line 3f of (A), (B), (C), (E), (F), (G), (H), and (J) denotes the length of a straight line connecting two inflection points at which a path of the circumference extending along the inner surface of the bore part 3b having a predetermined radius changes to a path of the circumference extending along the inner surface of the vent line 3f and having a radius d, as shown in the respective figure. The width W of the vent line 3f of (D) and (I) refers to the length of a straight line connecting the apexes of the two ridges provided on the inner surface of the bore part 3b.

### (Vacuum Pressure)

In FIG. 11, the value in each cell in the column of "Mouthpiece part Vacuum Pressure" indicates an average value of the vacuum pressures in the mouthpiece part 3a. Specifically, teat cups 1 including the liners 3 of the Modifications were attached to the milking devices 10, and were used in milking. The vacuum pressure in the mouthpiece part 3a was measured ten times, so that the average values was determined. The vacuum pressure is an absolute value of a pressure in the mouthpiece part 3a when an atmospheric pressure is defined as 0 kPa, and is a negative pressure because the vacuum pump 18 suctions the interior of the liner 3.

As shown in the figure, the vacuum pressure of each of the Modification was 20 kPa or higher, i.e., within the proper pressure range.

### (Number of Liners Experiencing Backflow)

The teat cups 1 including the liner 3 of the Modifications were attached to the milking devices 10, and used in milking ten times. The number of occurrences of backflow was counted. As shown in the column of "Number of Liners Experiencing Backflow" in FIG. 11, the results were satisfactory: the number of liners experiencing backflow was one or less in all the Modifications. Thus, the Modifications, which include the vent line(s) 3f, can exert an effect of curbing backflow.

### (Cleanability)

After the milking, tap water at 40°C was caused to pass through each liner at a flow rate of 5 L/min. for three minutes. Thereafter, a 0.02% sodium hypochlorite aqueous solution at room temperature was caused to pass through each liner for three minutes. This operation was performed to remove fat and sterilize the liner by means of alkali. Further, in order mainly to remove the sodium hypochlorite aqueous solution, each liner was rinsed for three minutes with tap water at 40°C passing through the liner. In this way, each liner was cleaned. Cleanability was evaluated by way of measurement of an organic residue remaining in the vent line even after the cleaning. Specifically, an area of about 1 cm² of the groove of the vent line was wiped with a cotton swab, and a value of adenosine triphosphate (ATP value) was measure in conformity with "Guidelines for Food Hygiene Inspection, Microbe Part 2004" (published by JAPAN FOOD HYGIENE ASSOCIATION). Here, cleanability improves as the ATP value decreases.

A permissible range of cleanability corresponds to ATP values equal to or less than 350. As shown in FIG. 11, all the Modifications had an ATP value equal to or less than 350, i.e., all the Modifications were in the permissible range of cleanability.
(1) A further analysis demonstrates that Modifications (D) and (I), which include the vent line 3f formed between the two ridges on the inner surface of the bore part 3b, had an ATP value of 300 and an ATP value of 350, respectively. The ATP values were not greater than 350, which means that the cleanability of these Modifications was within the permissible range.
(2) Modifications (C) and (H), which include the vent line 3f having a triangle shape in cross-section, had an ATP value of 220 and an ATP value of 210, respectively. The cleanability of these Modifications was better than that in the case (1) above.
(3) Modifications (B) and (G), which include the vent line 3f having a rectangular shape in cross-section, had an ATP value of 180 and an ATP value of 200, respectively. The cleanability of these Modifications was better than those in the cases of (1) and (2).
(4) Modifications (A), (E), (F), and (J), which include the vent line 3f having a semicircular shape in cross-section, all had an ATP value of one digit. The cleanability of these Modifications was the highest.

In the case of (1) above, the vent line 3f formed between the two ridges on the inner surface of the bore part 3b has corners at the bottom. In the cases of (2) and (3) above, the vent line 3f having a triangle or rectangular shape in cross-section also has a corner or corners at the bottom. It is presumed that refuse at the corner(s) is relatively difficult to remove.

On the other hand, in the case of (4) above, the vent line 3f having a semicircular shape in cross-section has no corner at the bottom. It is presumed that this would contribute to the high cleanability. Thus, from the viewpoint of the cleanability, it is preferable for the bottom of the vent line 3f to have no corner.

### (Durability)

To determine durability, the liners were continuously used in a milking simulation device. A time until the appearance of a crack was measured and defined as the durability.
(1) Modifications (C) and (H), in which the thickness of bore part 3b is 3.0 mm while the minimum thickness of the portion of the bore part 3b provided with the vent line 3f is 1.2 mm, had a durability of 20 hours.
(2) Modifications (A), (B), (F), and (G), in which the thickness of bore part 3b is 3.0 mm while the minimum thickness of the portion of the bore part 3b provided with the vent line 3f is 1.8 mm, had a durability of 40 or 50 hours.
(3) Modification (E), in which the thickness of bore part 3b is 3.0 mm while the minimum thickness of the portion of the bore part 3b provided with the vent line 3f is 2.1 mm, had a durability of 60 hours.
(4) Modifications (D) and (I), in which the thickness of bore part 3b is 3.0 mm while the minimum thickness of the portion of the bore part 3b provided with the vent line 3f is 3.0 mm, both had durability of 220 hours.
(5) Modification (J), in which the thickness of bore part 3b is 3.0 mm while the minimum thickness of the portion of the bore part 3b provided with the vent line 3f is 2.8 mm, had a durability of 270 hours.

As can be seen, it has been confirmed that the minimum thickness has an effect on the durability. On the other hand, Modification (J) in which the minimum thickness is 2.8 mm is superior in durability to Modifications (D) and (I) in which the minimum thickness is 3.0 mm. The reason is presumed as follows. In Modifications (D) and (I), while the minimum thickness is large, the vent line 3f has, on the inner surface thereof, portions (corners) where the thickness of the bore part 3b varies considerably. Stress concentrates on the portions (corners), making Modifications (D) and (I) to have a lower durability than Modification (J).

The results of the durability evaluation show that the minimum thickness of the portion of the bore part 3b where the vent line 3f is provided is preferably 70% or more, and more preferably 90% or more of the thickness of the portion of the bore part 3b where the vent line 3f is not provided. In the case where the thickness of the bore part 3b is 3.0 mm, designing the portion of the bore part 3b where the vent line 3f is provided to have a minimum thickness of 2.2 mm or more can enhance the durability in particular. Note that irrespective of the thickness t of the bore part 3b, the thinnest portion preferably has a thickness of 1.8 mm or more.

At present, in general stock farms, a liner is replaced with a new liner when it has been used in milking of about 2000 cows. This corresponds to 180-hour use, which can be converted into three months with daily two-hour milking. Hence, the durability is more preferably 180 hours or longer.

### EXPLANATION OF REFERENCE NUMERALS

S3: Vent Line Cross-Sectional Area
d: Depth (Radius)
1: Teat Cup
2: Shell
3: Liner
3a: Mouthpiece part
3aa: Mouthpiece vent
3b: Bore part
3c: Thick-Walled Portion
3d: Short Milk Tube part
3da: Short milk tube vent
3g: Protruded line
10: Milking Device
30: Milk Claw
36: Claw Vent
50: Teat
100: Milking System

## Claims

1. A liner (3) for a teat cup (1) of a milking device (10), the liner (3) having a cylindrical shape and comprising:
a bore part (3b) disposed in a cylindrical shell (2) such that a space (S) is formed between an inner surface of the shell (2) and the bore part (3b), the bore part (3b) being elastically deformable between an open state and a closed state;
a mouthpiece part (3a) disposed at one end of the bore part (3b) and closing one end of the shell (2), the mouthpiece part (3a) being configured to allow a teat (50) to be inserted therethrough and being provided with a vent (3aa) which opens to an outside;
a short milk tube part (3d) disposed at the other end of the bore part (3b) and closing the other end of the shell (2), the short milk tube part (3d) allowing milk (m) sucked from the teat (50) on the bore part (3b) to flow therethrough; and
a vent line (3f) provided as a groove on an inner surface of the liner (3), **characterized in that** the vent line (3f) extends on the bore part (3b) continuously from the vent (3aa).

2. The liner (3) according to claim 1, wherein the vent line (3f) has a semicircular shape in a cross-section perpendicular to the longitudinal direction of the bore part (3B), the vent line having a radius that is equal to or smaller than 1/2 of a thickness (t) of the bore part (3b).

3. The liner (3) according to claim 1 or 2, wherein the vent line (3f) has a width (W) of 4.0 mm or less.

4. The liner (3) according to any one of claims 1 to 3, wherein
there is provided a plurality of mouthpiece vents (3aa), and the same number of vent lines (3f) is provided.

5. The liner (3) according to claim 2, wherein
the contour of the circumference extending along the inner surface of the bore part (3b) and having a predetermined radius, and the contour along the inner surface of the vent line (3f) join with each other while forming an angle as an inflection point (P) therebetween.

6. The liner (3) according to claim 2, wherein
a ratio (d/W) of the depth (d) of the vent line (3f) to the width (W) of the vent line (3f) is equal to or greater than 1/2.

7. The liner (3) according to any one of claims 1 to 6, wherein
the vent line (3f) extends to reach a coupling portion (3c) where the bore part (3b) is coupled to the short milk tube part (3d).

8. The liner (3) according to any one of claims 1 to 7, further comprising:
a protruded line (3g) on an outer surface of a portion of the bore part (3b), the portion being provided with the vent line (3f) on an inner surface thereof.

9. The liner (3) according to claim 8, wherein
the protruded line (3g) is wider than the vent line (3f).

10. The liner (3) according to any one of claims 1 to 9, wherein
in a direction perpendicular to a longitudinal direction of the liner (3), the vent line (3f) has a cross-sectional area (S3) that is larger than an opening area of the vent (3aa) provided on the mouthpiece part (3a).

11. A teat cup (1) comprising:
the liner (3) according to any one of claims 1 to 10; and
the shell (2).

12. A milking device (10) comprising:
the teat cup (1) according to claim 11; and
a milk claw (30) to which the short milk tube part (3d) is coupled.

## Patentansprüche

1. Einlage (3) für einen Zitzenbecher (1) einer Melkvorrichtung (10), wobei die Einlage (3) eine zylindrische Form hat und Folgendes aufweist:
ein Bohrungsteil (3b), das so in einer zylindrischen Umhüllung (2) vorgesehen ist, dass ein Raum (S) zwischen einer Innenfläche der Umhüllung (2) und dem Bohrungsteil (3b) gebildet ist, wobei das Bohrungsteil (3b) zwischen einem offenen Zustand und einem geschlossenen Zustand elastisch verformbar ist;
ein Mundstückteil (3a), das an einem Ende des Bohrungsteils (3b) vorgesehen ist und ein Ende der Umhüllung (2) verschließt, wobei das Mundstückteil (3a) dafür ausgelegt ist, das Einführen einer Zitze (50) durch es hindurch zu ermöglichen, und mit einer Entlüftungsbohrung (3aa) versehen ist, die sich zur Außenseite hin öffnet;
ein kurzes Milchschlauchteil (3d), das am anderen Ende des Bohrungsteils (3b) angeordnet ist und das andere Ende der Umhüllung (2) verschließt, wobei das kurze Milchschlauchteil (3d) gestattet, dass es von Milch (m) durchströmt werden kann, die aus der Zitze (50) am Bohrungsteil (3b) herausgesaugt wird; und
eine Entlüftungsleitung (3f), die als Rille an einer Innenfläche der Einlage (3) vorgesehen ist, **dadurch gekennzeichnet, dass** sich die Entlüftungsleitung (3f) am Bohrungsteil (3b) von der Entlüftungsbohrung (3aa) aus kontinuierlich erstreckt.

2. Einlage (3) nach Anspruch 1, wobei
die Entlüftungsleitung (3f) in einem zur Längsrichtung des Bohrungsteils (3b) senkrechten Querschnitt eine halbkreisförmige Form hat, wobei die Entlüftungsleitung einen Radius hat, der so groß wie oder kleiner als die Hälfte einer Dicke (t) des Bohrungsteils (3b) ist.

3. Einlage (3) nach Anspruch 1 oder 2, wobei
die Entlüftungsleitung (3f) eine Breite (W) von 4,0 mm oder weniger hat.

4. Einlage (3) nach einem der Ansprüche 1 bis 3, wobei
eine Vielzahl von Mundstück-Entlüftungsbohrungen (3aa) und dieselbe Anzahl an Entlüftungsleitungen (3f) vorgesehen ist.

5. Einlage (3) nach Anspruch 2, wobei
die Kontur des Umfangs, die sich entlang der Innenfläche des Bohrungsteils (3b) erstreckt und einen vorbestimmten Radius hat, und die Kontur entlang der Innenfläche der Entlüftungsleitung (3f) ineinander übergehen, während sie einen Winkel als Biegungspunkt (P) zwischen sich bilden.

6. Einlage (3) nach Anspruch 2, wobei
ein Verhältnis (d/W) der Tiefe (d) der Entlüftungsleitung (3f) zur Breite (W) der Entlüftungsleitung (3f) größer oder gleich 1/2 ist.

7. Einlage (3) nach einem der Ansprüche 1 bis 6, wobei
sich die Entlüftungsleitung (3f) so weit erstreckt, dass sie einen Kopplungsabschnitt (3c) erreicht, wo das Bohrungsteil (3b) mit dem kurzen Milchschlauchteil (3d) gekoppelt ist.

8. Einlage (3) nach einem der Ansprüche 1 bis 7, darüber hinaus aufweisend:
eine hervorstehende Leitung (3g) an einer Außenfläche eines Abschnitts des Bohrungsteils (3b), wobei der Abschnitt an einer Innenfläche von ihm mit der Entlüftungsleitung (3f) versehen ist.

9. Einlage (3) nach Anspruch 8, wobei
die hervorstehende Leitung (3g) breiter als die Entlüftungsleitung (3f) ist.

10. Einlage (3) nach einem der Ansprüche 1 bis 9, wobei
in einer zu einer Längsrichtung der Einlage (3) senkrechten Richtung die Entlüftungsleitung (3f) eine Querschnittsfläche (S3) hat, die größer ist als eine am Mundstückteil (3a) vorgesehene Öffnungsfläche der Entlüftungsbohrung (3aa).

11. Zitzenbecher (1), aufweisend:
die Einlage (3) nach einem der Ansprüche 1 bis 10; und
die Umhüllung (2).

12. Melkvorrichtung (10), aufweisend:
den Zitzenbecher (1) nach Anspruch 11; und
einen Milchgreifer (30), mit dem das kurze Milchschlauchteil (3d) gekoppelt ist.

## Revendications

1. Manchon (3) pour un gobelet trayeur (1) d'un dispositif de traite (10), le manchon (3) ayant une forme cylindrique et comprenant :
une partie alésage (3b) disposée dans une enveloppe cylindrique (2) de telle sorte qu'un espace (S) soit formé entre une surface intérieure de l'enveloppe (2) et la partie alésage (3b), la partie alésage (3b) étant déformable élastiquement entre un état ouvert et un état fermé ;
une partie embout (3a) disposée à une extrémité de la partie alésage (3b) et fermant une extrémité de l'enveloppe (2), la partie embout (3a) étant configurée pour permettre à un mamelon (50) d'être inséré à travers celle-ci et étant pourvue d'un évent (3aa) qui s'ouvre vers un extérieur ;
une partie tuyau court à lait (3d) disposée à l'autre extrémité de la partie alésage (3b) et fermant l'autre extrémité de l'enveloppe (2), la partie tuyau court à lait (3d) permettant à du lait (m) aspiré depuis le mamelon (50) sur la partie alésage (3b) de s'écouler à travers celle-ci ; et
une conduite d'évent (3f) prévue comme gorge sur une surface intérieure du manchon (3), **caractérisée en ce que** la conduite d'évent (3f) s'étend sur la partie alésage (3b) de manière continue depuis l'évent (3aa).

2. Le manchon (3) selon la revendication 1, sachant que
la conduite d'évent (3f) a une forme semicirculaire dans une section transversale perpendiculaire à la direction longitudinale de la partie alésage (3b), la conduite d'évent ayant un rayon qui est égal ou inférieur à 1/2 d'une épaisseur (t) de la partie alésage (3b).

3. Le manchon (3) selon la revendication 1 ou 2, sachant que
la conduite d'évent (3f) a une largeur (W) de 4,0 mm ou moins.

4. Le manchon (3) selon l'une quelconque des revendications 1 à 3, sachant que
une pluralité d'évents d'embout (3aa) est prévue, et le même nombre de conduites d'évent (3f) est prévu.

5. Le manchon (3) selon la revendication 2, sachant que
le contour de la circonférence s'étendant le long de la surface intérieure de la partie alésage (3b) et ayant un rayon prédéterminé, et le contour le long de la surface intérieure de la conduite d'évent (3f) se rejoignent l'un l'autre en formant un angle comme point d'inflexion (P) entre eux.

6. Le manchon (3) selon la revendication 2, sachant que
un rapport (d/W) de la profondeur (d) de la conduite d'évent (3f) à la largeur (W) de la conduite d'évent (3f) est égal ou supérieur à 1/2.

7. Le manchon (3) selon l'une quelconque des revendications 1 à 6, sachant que
la conduite d'évent (3f) s'étend pour atteindre une partie couplage (3c) où la partie alésage (3b) est couplée à la partie tuyau court à lait (3d).

8. Le manchon (3) selon l'une quelconque des revendications 1 à 7, comprenant en outre :
une conduite en saillie (3g) sur une surface extérieure d'une portion de la partie alésage (3b), la portion étant pourvue de la conduite d'évent (3f) sur une surface intérieure de celle-ci.

9. Le manchon (3) selon la revendication 8, sachant que
la conduite en saillie (3g) est plus large que la conduite d'évent (3f).

10. Le manchon (3) selon l'une quelconque des revendications 1 à 9, sachant que
dans une direction perpendiculaire à une direction longitudinale du manchon (3), la conduite d'évent (3f) a une aire de section transversale (S3) qui est supérieure à une aire d'ouverture de l'évent (3aa) prévu sur la partie embout (3a).

11. Gobelet trayeur (1) comprenant :
le manchon (3) selon l'une quelconque des revendications 1 à 10 ; et
l'enveloppe (2).

12. Dispositif de traite (10) comprenant :
le gobelet trayeur (1) selon la revendication 11 ; et
une griffe à lait (30) à laquelle la partie tuyau court à lait (3d) est couplée.
